# DEMANDE DE BREVET EUROPEEN

(11) **EP 4 535 583 A1**
(43) Date de publication de la demande: **09.04.2025**
(21) Numéro de dépôt: 24204801.5
(22) Date de dépôt: 04.10.2024
(51) Int. Cl.: H02B 3/00

(54) **DISPOSITIF ÉLECTRONIQUE ET PROCÉDÉ D'AIDE À LA SURVEILLANCE D'UNE ARMOIRE ÉLECTRIQUE, SYSTÈME DE RÉPARTITION D'UN COURANT ÉLECTRIQUE COMPRENANT UN TEL DISPOSITIF, ET PROGRAMME D'ORDINATEUR ASSOCIÉ**

(30) Priorité: 06.10.2023 FR 2310706
(71) Demandeur: SCHNEIDER ELECTRIC INDUSTRIES SAS, 92500 Rueil-Malmaison (FR)
(72) Inventeur: AGNAOU, Abderrahmane, 38100 GRENOBLE (FR); SAMUDRIKAM, Chandrasekhar, 35000 RENNES (FR); HERPIN, Jean-Philippe, 73800 PORTE DE SAVOIE (FR)
(74) Mandataire: Lavoix

(57) **Abrégé**

La présente invention concerne un dispositif électronique d'aide à la surveillance d'une armoire électrique (10), comprenant un module d'acquisition, configuré pour acquérir des valeurs de grandeurs représentatives d'une intensité et respectivement d'une tension d'un courant électrique, mesurées par un capteur d'intensité (41, 42, 43, 44) et respectivement un capteur de tension (51, 52, 53, 54), un module d'estimation, configuré pour calculer un état estimé de l'armoire électrique (10) via un réseau de neurones et un module d'émission, configuré pour émettre un message représentatif de l'état estimé sous une forme parmi une forme visuelle et une forme sonore. Selon l'invention, le module d'acquisition est en outre configuré pour acquérir une valeur d'au moins une grandeur additionnelle et le module d'estimation est configuré pour calculer l'état estimé de l'armoire électrique (10) via le réseau de neurones en fonction en outre de l'au moins une grandeur additionnelle.

## Description

La présente invention concerne un dispositif électronique et procédé d'aide à la surveillance d'une armoire électrique, un système de répartition d'un courant électrique comprenant un tel dispositif, et un programme d'ordinateur associé.

Pour surveiller une armoire électrique, et en particulier détecter un risque de dysfonctionnement, comme par exemple un feu dans l'armoire électrique, il est connu d'effectuer des opérations de surveillance ponctuelles sur les armoires. Cependant, il n'est pas toujours possible d'identifier des défauts électriques ou structurels de l'armoire lors des opérations de surveillance. Il est également connu d'utiliser des capteurs, en particulier des capteurs de courant, de tension et de température, localisés à l'intérieur de l'armoire électrique, et d'émettre un signal d'alarme si une valeur mesurée par l'un de ces capteurs franchit un seuil prédéfini.

CN 115 880 848 A propose d'utiliser un algorithme d'intelligence artificielle pour détecter un feu électrique dans une armoire électrique, utilisant des données relatives à une température de composants à l'intérieur de l'armoire électrique, un courant de fuite, une intensité et une tension d'un courant électrique circulant dans l'armoire électrique.

Toutefois, il est nécessaire de rendre la détection plus efficace.

Le but de l'invention est alors de proposer un dispositif électronique d'aide à la surveillance permettant de résoudre ces inconvénients et d'améliorer la détection.

A cet effet, l'invention a pour objet un dispositif électronique d'aide à la surveillance d'une armoire électrique, l'armoire électrique comprenant une borne d'entrée et plusieurs bornes de sortie, et étant apte à être connectée à une source via la borne d'entrée et à une pluralité de charges via les bornes de sortie et configurée pour répartir un courant électrique depuis la source vers la pluralité de charges, l'armoire électrique comprenant un sectionneur connecté à la borne d'entrée et un bus principal connecté entre le sectionneur et les bornes de sortie, le dispositif comprenant :
- un module d'acquisition, configuré pour acquérir des valeurs de grandeurs représentatives d'une intensité et respectivement d'une tension d'un courant électrique circulant entre la borne d'entrée et les bornes de sortie, mesurées par un capteur d'intensité et respectivement un capteur de tension ;
- un module d'estimation, configuré pour calculer un état estimé de l'armoire électrique via un réseau de neurones, chaque grandeur acquise par le module d'acquisition étant une variable d'entrée du réseau de neurones, l'état estimé de l'armoire électrique étant une variable de sortie du réseau de neurones ; et
- un module d'émission, configuré pour émettre un message représentatif de l'état estimé sous une forme parmi une forme visuelle et une forme sonore.

Selon l'invention, le module d'acquisition est en outre configuré pour acquérir une valeur d'au moins une grandeur additionnelle mesurée par au moins un capteur additionnel parmi un capteur de gaz et un capteur d'humidité, la ou chaque grandeur étant représentative respectivement d'une quantité de particules de gaz et d'une humidité à l'intérieur de l'armoire électrique. Egalement selon l'invention, le module d'estimation est alors configuré pour calculer l'état estimé de l'armoire électrique via le réseau de neurones en fonction en outre de l'au moins une grandeur additionnelle, l'au moins une grandeur additionnelle étant une variable additionnelle d'entrée du réseau de neurones.

Grâce à l'invention, le module d'estimation calcule un état estimé de l'armoire électrique à l'aide d'au moins une grandeur additionnelle, mesurée par au moins un capteur additionnel. Cette grandeur additionnelle permet d'avoir des variables plus pertinentes en entrée du réseau de neurones, afin d'améliorer la fiabilité du calcul de l'état estimé de l'armoire électrique.

Suivant d'autres aspects avantageux de l'invention, le dispositif comprend une ou plusieurs des caractéristiques suivantes, prises isolément ou suivant toutes les combinaisons techniquement possibles :
- Le module d'acquisition est en outre configuré pour acquérir les valeurs des grandeurs additionnelles mesurées par le capteur d'humidité et par le capteur de gaz.
- Le module d'acquisition est en outre configuré pour acquérir une valeur d'une grandeur mesurée par un capteur de température, la grandeur mesurée étant représentative d'une température à l'intérieur de l'armoire électrique.
- Le module d'acquisition est en outre configuré pour acquérir des valeurs de grandeurs mesurées par une pluralité de capteurs de température, les grandeurs étant représentatives de la température à l'intérieur de l'armoire électrique, chaque capteur de température étant configuré pour mesurer une température parmi : une température au voisinage de la borne d'entrée, une température au voisinage d'une borne de sortie respective, une température du bus principal et une température d'un dispositif de protection électrique, connecté entre le bus principal et une borne de sortie respective.
- Le module d'acquisition est en outre configuré pour acquérir une valeur d'une grandeur représentative de vibrations de l'armoire électrique, mesurée par un capteur de vibrations.
- Le module d'acquisition est en outre configuré pour acquérir une valeur d'une grandeur représentative de bruit dans l'armoire électrique, mesurée par un capteur de bruit.
- L'état estimé de l'armoire électrique est un état parmi le groupe consistant en : un état normal, un état anormal et un état critique.

L'invention concerne également un système de répartition d'un courant électrique entre une source et une pluralité de charges, le système comprenant :
- une armoire électrique, comprenant :
   ∘ une borne d'entrée, apte à être connectée à la source,
   ∘ plusieurs bornes de sortie, aptes à être connectées à la pluralité de charges,
   ∘ un sectionneur, connecté à la borne d'entrée, et
   ∘ un bus principal, connecté entre le sectionneur et la pluralité de bornes de sortie,
   l'armoire électrique étant configurée pour répartir le courant électrique depuis la source vers la pluralité de charges ;
- un capteur d'intensité et respectivement un capteur de tension, configurés pour mesurer des valeurs de grandeurs représentatives d'une intensité et respectivement d'une tension d'un courant électrique circulant entre la borne d'entrée et les bornes de sortie de l'armoire électrique ;
- un dispositif électronique d'aide à la surveillance de l'armoire électrique.

Selon l'invention, le système comprend en outre au moins un capteur additionnel parmi un capteur de gaz et un capteur d'humidité, configuré pour acquérir une valeur d'au moins une grandeur additionnelle, représentative respectivement d'une quantité de particules de gaz et d'une humidité à l'intérieur de l'armoire électrique. Egalement selon l'invention, le dispositif électronique d'aide à la surveillance est selon l'une quelconque des revendications précédentes.

L'invention concerne également un procédé d'aide à la surveillance d'une armoire électrique, l'armoire électrique comprenant une borne d'entrée et plusieurs bornes de sortie, et étant apte à être connectée à une source via la borne d'entrée et à une pluralité de charges via les bornes de sortie et configurée pour répartir un courant électrique depuis la source vers la pluralité de charges, l'armoire électrique comprenant un sectionneur connecté à la borne d'entrée et un bus principal connecté entre le sectionneur et les bornes de sortie, le procédé étant mis en oeuvre par un dispositif électronique d'aide à la surveillance, le procédé comprenant les étapes suivantes :
- acquisition de valeurs de grandeurs mesurées par un capteur d'intensité et respectivement un capteur de tension, les grandeurs étant représentatives d'une intensité et respectivement d'une tension du courant électrique circulant entre la borne d'entrée et les bornes de sortie de l'armoire électrique ;
- calcul, via un réseau de neurones, d'un état estimé de l'armoire électrique, chaque grandeur mesurée étant une variable d'entrée du réseau de neurones, l'état estimé étant une variable de sortie du réseau de neurones ; et
- émission, sous une forme parmi une forme visuelle et une forme sonore, d'un message représentatif de l'état estimé.

Selon l'invention, le procédé comprend en outre une étape d'acquisition d'une valeur d'au moins une grandeur additionnelle mesurée par au moins un capteur additionnel parmi un capteur de gaz et un capteur d'humidité, la ou chaque grandeur étant représentative respectivement d'une humidité et d'une quantité de particules de gaz à l'intérieur de l'armoire électrique. Egalement selon l'invention, lors de l'étape de calcul l'au moins une grandeur additionnelle est une variable additionnelle d'entrée du réseau de neurones.

L'invention concerne également un programme d'ordinateur comportant des instructions logicielles qui, lorsqu'elles sont exécutées par un ordinateur, mettent en oeuvre un procédé d'aide à la surveillance d'une armoire électrique tel que défini ci-dessus.

L'invention apparaîtra plus clairement à la lecture de la description qui va suivre, donnée uniquement à titre d'exemple non limitatif, et faite en référence aux dessins sur lesquels :
- [Fig. 1] la figure 1 est une représentation schématique d'un système de répartition d'un courant électrique selon l'invention ;
- [Fig. 2] la figure 2 est une représentation schématique d'un dispositif d'aide à la surveillance d'une armoire électrique selon l'invention ;

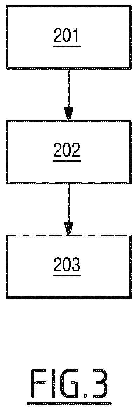

- [Fig. 3] la figure 3 est un organigramme d'un procédé d'aide à la surveillance d'une armoire électrique selon l'invention.

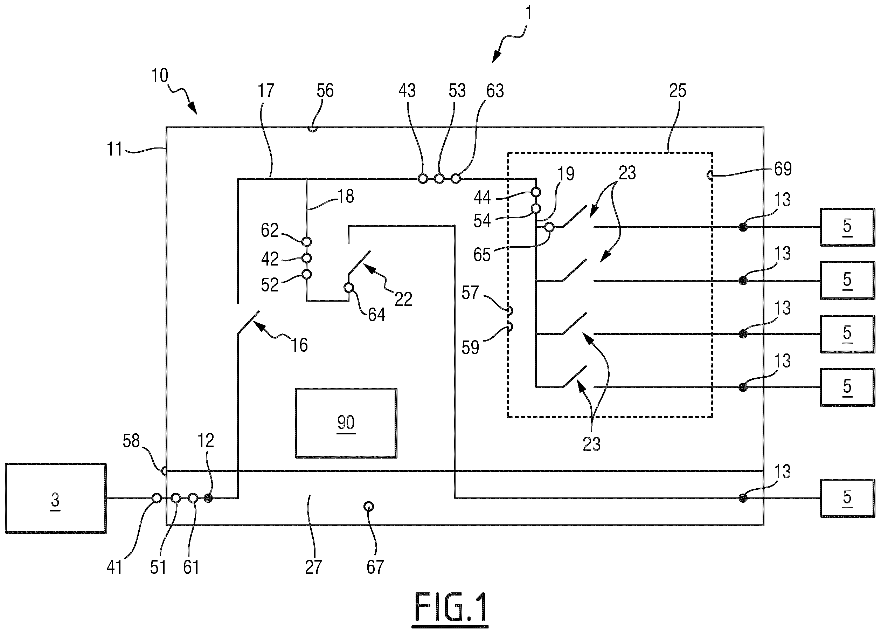

La figure 1 est une représentation schématique d'un système 1 de répartition d'un courant électrique entre une source 3 et une pluralité de charges 5, le système de répartition 1 étant destiné à être connecté à la source 3 et à la pluralité de charges 5.

La source 3 est par exemple un transformateur, comme un transformateur moyenne tension ou un transformateur moyenne tension vers basse tension. De manière alternative, la source électrique est un autre système de répartition d'un courant électrique. La source électrique 3 est apte à fournir un courant électrique au système de répartition 1 qui est configuré pour le répartir entre les charges 5.

Les charges 5 consomment le courant électrique fourni par la source 3. Les charges 5 sont par exemple des équipements domestiques, des serveurs, des bornes de recharge, etc.

Le système de répartition 1 comprend une armoire électrique 10. L'armoire électrique 10 est située par exemple à l'intérieur d'un bâtiment et repose par exemple sur un sol. L'armoire électrique 10 comprend un tableau moyenne tension et est avantageusement configurée pour répartir un courant électrique triphasé de tension comprise entre 1000 V et 60 kV. Dans ce cas, l'armoire électrique 10 est typiquement constituée de ce tableau moyenne tension.

En variante, l'armoire électrique 10 comprend un tableau basse tension, et est configurée pour répartir un courant électrique triphasé de tension inférieure ou égale à 400V. Dans cette variante, l'armoire électrique 10 est typiquement constituée du tableau basse tension.

En variante, l'armoire électrique 10 comprend un tableau basse tension et un tableau moyenne tension. Dans cette variante, l'armoire électrique 10 est typiquement constituée de ces tableaux moyenne tension et basse tension.

L'armoire électrique 10 comprend une enveloppe 11, à l'intérieur de laquelle sont disposés la plupart de ses composants. L'enveloppe 11 est par exemple en forme d'un coffret, non représenté, apte à être totalement fermé, et comportant typiquement quatre parois latérales, une paroi arrière mécaniquement solidaire des quatre parois latérales, et une paroi avant. La paroi avant forme généralement une porte amovible ou encore une porte mobile par rapport aux parois latérales entre une configuration fermée dans laquelle le coffret est refermé et une configuration ouverte permettant d'avoir accès aux composants disposés à l'intérieur du coffret.

L'armoire électrique 10 est configurée pour répartir le courant électrique depuis la source 3 vers la pluralité de charges 5. A cet effet, l'armoire électrique 10 comprend une borne d'entrée 12 et plusieurs bornes de sortie 13. Lorsque le système de répartition 1 est en fonctionnement, la borne d'entrée 12 est connectée à la source 3 et les bornes de sortie 13 sont chacune connectées à une charge 5 respective.

L'armoire électrique 10 comprend également un sectionneur 16 et un bus principal 17. Le sectionneur 16 est connecté entre la borne d'entrée 12 et le bus principal 17. Le sectionneur 16 est configuré pour interrompre une circulation du courant électrique circulant depuis la source 3 dans l'armoire électrique 10, afin notamment de protéger les charges 5 en cas de défaut électrique dans l'armoire électrique 10 ou en amont de l'armoire électrique 10, par exemple en cas de défaut électrique au niveau de la source 3.

En variante, le sectionneur 16 est un disjoncteur, par exemple un disjoncteur à air.

Le bus principal 17 est connecté entre le sectionneur 16 et les bornes de sortie 13. Le bus principal 17 est généralement connecté aux bornes de sortie 13 de manière indirecte.

En effet, comme représenté sur la figure 1, l'armoire électrique 10 comprend un premier bus de dérivation 18, un deuxième bus de dérivation 19, un premier dispositif de protection électrique 22 et plusieurs deuxièmes dispositifs de protection électrique 23.

Le bus principal 17 est connecté au premier 18 et au deuxième 19 bus de dérivation.

Le premier bus de dérivation 18 est connecté au premier dispositif de protection 22. Le premier dispositif de protection 22 est par exemple un disjoncteur à air, ou un disjoncteur miniature, ou encore un disjoncteur différentiel.

Le deuxième bus de dérivation 19 est connecté aux deuxièmes dispositifs de protection 23. Dans l'exemple de la figure 1, quatre deuxième dispositifs de protection 23 sont représentés. Les deuxièmes dispositifs de protection 23 sont avantageusement des disjoncteurs miniatures, ou des disjoncteurs différentiels.

En variante, non représentée, l'armoire électrique 10 comprend des bus de dérivation supplémentaires, non représentés, chaque bus de dérivation supplémentaire étant connecté à au moins un dispositif de protection électrique supplémentaire.

Les dispositifs de protection 22, 23 sont configurés pour interrompre une circulation du courant électrique circulant depuis l'armoire électrique 10 vers les charges 5, en particulier en cas de défaut électrique en aval de l'armoire électrique 10, en particulier entre les bornes de sortie 13 et les charges 5, ou en cas de défaut électrique dans les charges 5, afin de protéger le système de répartition 1, ainsi que les charges 5.

L'armoire électrique 10 comprend avantageusement un tiroir 25. Les deuxièmes dispositifs de protection 23 sont alors avantageusement logés dans le tiroir 25. Le tiroir 25 est typiquement accessible par un utilisateur, par exemple afin de manipuler les deuxièmes dispositifs de protection 23, de les remplacer, d'en ajouter, ou lorsque les deuxièmes dispositifs de protection 23 sont des disjoncteurs, de les réarmer suite à un défaut électrique.

Selon une variante non représentée, l'armoire électrique 10 comprend plusieurs tiroirs, dans lesquels sont reçus des dispositifs de protection électrique supplémentaires.

L'armoire électrique 10 comprend une plinthe 27. La plinthe 27 reçoit avantageusement des câbles de connexion, par exemple entre la source 3 et le sectionneur, ou entre le premier dispositif de protection 22 et la charge 5. Selon une disposition particulièrement avantageuse, non représentée, la plinthe reçoit l'ensemble des câbles reliés aux dispositifs de protection et aux charges.

Le système de répartition 1 comprend également des capteurs. Plus spécifiquement, dans l'exemple de la figure 1, le système de répartition 1 comprend des capteurs d'intensité 41, 42, 43, 44 ; des capteurs de tension 51, 52, 53, 54 ; des capteurs de gaz 56, 57 ; des capteurs de d'humidité 58, 59 ; des capteurs de température 61, 62, 63, 64, 65 ; un capteur de vibrations 67 et un capteur de bruit 69.

Dans l'exemple de la figure 1, les capteurs d'intensité 41, 42, 43 et 44 sont au nombre de quatre, à savoir un premier capteur d'intensité 41, un deuxième capteur d'intensité 42, un troisième capteur d'intensité 43 et un quatrième capteur d'intensité 44, et sont configurés pour mesurer des valeurs d'une grandeur représentative d'une intensité du courant électrique circulant dans l'armoire électrique 10. Plus précisément, les capteurs d'intensité 41 à 44 sont ici configurés pour mesurer une intensité électrique circulant respectivement dans la borne d'entrée 12 par le premier capteur d'intensité 41, dans le premier bus de dérivation 18 par le deuxième capteur d'intensité 42, dans le bus principal 17 par le troisième capteur d'intensité 43 et dans le deuxième bus de dérivation 19 par le quatrième capteur d'intensité 44.

De manière avantageuse, les capteurs d'intensité 41 à 44 sont des capteurs d'intensité triphasés, c'est-à-dire configurés pour mesurer l'intensité de chaque phase du courant électrique.

En variante non représentée, le système de répartition 1 comprend des capteurs d'intensité supplémentaires configurés pour mesurer une intensité du courant électrique circulant en outre dans les dispositifs de protection 22 et 23 et les bornes de sortie 13.

De manière particulièrement avantageuse, le système de répartition 1 comprend des capteurs d'intensité mesurant l'intensité du courant électrique dans chacun des éléments cités précédemment, et en outre, comprend des capteurs d'intensité mesurant l'intensité du courant électrique à différentes positions du bus principal 17 et des premier 18 et deuxième 19 bus secondaires, à chaque borne de sortie 13 et à chaque dispositif de protection 23.

Dans l'exemple de la figure 1, les capteurs de tension 51, 52, 53 et 54 sont au nombre de quatre, à savoir un premier capteur de tension 51, un deuxième capteur de tension 52, un troisième capteur de tension 53 et un quatrième capteur de tension 54, et sont configurés pour mesurer des valeurs de grandeurs représentatives d'une tension du courant électrique circulant dans l'armoire 10. Plus précisément, les capteurs de tension 51 à 54 mesurent une différence de potentiel entre le courant électrique circulant dans l'armoire électrique 10 et une référence de potentiel. Dans l'exemple de la figure 1, les capteurs de tension 51 à 54 sont configurés pour mesurer une tension du courant électrique circulant respectivement dans la borne d'entrée 12 par le premier capteur de tension 51, dans le premier bus de dérivation 18 par le deuxième capteur de tension 52, dans le bus principal 17 par le troisième capteur de tension 53 et dans le deuxième bus de dérivation 19 par le quatrième capteur de tension 54.

De manière avantageuse, les capteurs de tension 51 à 54 sont des capteurs de tension triphasés, c'est-à-dire configurés pour mesurer une tension de chaque phase du courant électrique.

En variante non représentée, le système de répartition 1 comprend des capteurs de tension supplémentaires configurés pour mesurer une tension du courant électrique circulant dans les dispositifs de protection 22 et 23 et les bornes de sortie 13.

De manière particulièrement avantageuse, le système de répartition 1 comprend des capteurs de tension mesurant la tension du courant électrique circulant dans chacun des éléments cités précédemment, et en outre, comprend des capteurs de tension mesurant la tension du courant électrique à différentes positions du bus principal 17 et des premier 18 et deuxième 19 bus secondaires, à chaque borne de sortie 13 et dans chacun des dispositifs de protection 23.

Dans l'exemple de la figure 1, les capteurs de gaz 56 et 57 sont au nombre de deux, à savoir un premier capteur de gaz 56 et un deuxième capteur de gaz 57 et sont configurés pour mesurer une grandeur représentative d'une quantité de particules de gaz à l'intérieur de l'armoire électrique 10, c'est-à-dire à l'intérieur de l'enveloppe 11 de l'armoire électrique 10. Plus précisément, les capteurs de gaz 56 et 57 mesurent la quantité de particules d'au moins un gaz donné. Préférentiellement, les capteurs de gaz 56 et 57 mesurent le type de gaz à l'intérieur de l'armoire électrique, et la quantité de particules pour chaque type de gaz.

Ainsi que représenté sur la figure 1, le premier capteur de gaz 56 est localisé sur l'enveloppe 11, et de manière avantageuse, en haut de l'enveloppe 2, c'est-à-dire à une position la plus éloignée du sol. Le deuxième capteur de gaz 57 est localisé à l'intérieur du tiroir 19, sur une paroi interne du tiroir 19.

En variante non représentée, le système de répartition 1 comprend des capteurs de gaz supplémentaires, configurés pour mesurer la quantité de particules de gaz dans, ou au voisinage de des bornes de sortie 13. Dans le cas où les bornes de sortie 13 sont au voisinage les unes des autres, c'est-à-dire toute borne de sortie 13 est éloignée de moins de 10 cm de toute autre borne de sortie 13, alors un seul capteur de gaz 56 ou 57 est avantageusement suffisant pour mesurer la quantité de particules de gaz au voisinage de toutes les bornes de sortie 13.

Dans l'exemple de la figure 1, les capteurs d'humidité 58 et 59 sont au nombre de deux, à savoir un premier capteur d'humidité 58 et un deuxième capteur d'humidité 59, et sont configurés pour mesurer une grandeur représentative d'une humidité. En particulier la grandeur est représentative de l'humidité de l'air à l'intérieur de l'enveloppe 11.

En pratique, les capteurs d'humidité 58 et 59 sont généralement également des capteurs d'une grandeur représentative de température ambiante, c'est-à-dire d'une grandeur représentative d'une température de l'air au voisinage du capteur d'humidité 58, 59. Par « au voisinage de », on entend situé à au plus une distance de quelques centimètres, par exemple dix centimètres.

Ainsi que représenté sur la figure 1, le premier capteur d'humidité 58 est localisé au voisinage de la borne d'entrée 12, sur l'enveloppe 11, et est configuré pour mesurer une grandeur représentative d'une humidité de l'air au voisinage de la borne d'entrée 12. Le deuxième capteur d'humidité 59 est localisé à l'intérieur du tiroir 19, sur une paroi interne du tiroir 19, et est configuré pour mesurer une grandeur représentative d'une humidité de l'air à l'intérieur du tiroir 19.

En variante non représentée, le système de répartition 1 comprend des capteurs d'humidité supplémentaires, configurés pour mesurer l'humidité dans, ou au voisinage des bornes de sortie 13. Dans le cas où les bornes de sortie 13 sont au voisinage les unes des autres, alors un seul capteur d'humidité 58 ou 59 est avantageusement suffisant pour mesurer l'humidité au voisinage de toutes les bornes de sortie 13.

Dans l'exemple de la figure 1, les capteurs de température 61, 62, 63, 64 et 65 sont au nombre de cinq, à savoir un premier capteur de température 61, un deuxième capteur de température 62, un troisième capteur de température 63, un quatrième capteur de température 64 et un cinquième capteur de température 65. Les capteurs de température 61 à 65 sont configurés pour mesurer des valeurs de grandeurs représentatives d'une température de l'armoire 10. Plus particulièrement, les capteurs de température 61 à 65 sont des capteurs de température de surface et sont configurés pour mesurer des valeurs de grandeurs représentatives d'une température d'une surface des éléments de l'armoire 10.

Les capteurs de température 61 à 65 sont ici configurés pour mesurer respectivement une température de la borne d'entrée 12 par le premier capteur de température 61, du premier bus de dérivation 18 par le deuxième capteur de température 62, du bus principal 17 par le troisième capteur de température 63, du premier dispositif de protection 22 par le quatrième capteur de température 64 et de l'un des deuxièmes dispositifs de protection 23 par le cinquième capteur de température 65.

En variante non représentée, le système de répartition 1 comprend des capteurs de température supplémentaires, configurés pour mesurer une température de cinq des éléments suivants : le bus principal 17, le deuxième bus de dérivation 19, le dispositif de protection 22 et les bornes de sortie 13.

De manière particulièrement avantageuse, le système de répartition 1 comprend des capteurs de température mesurant la température de chacun des éléments cités précédemment, et en outre, comprend des capteurs de température mesurant la température à différentes positions du bus principal 17 et des premier 18 et deuxième 19 bus secondaires, et à chaque dispositif de protection 23.

Le capteur de vibrations 67 est configuré pour acquérir une valeur d'une grandeur représentative de vibrations de l'armoire électrique 10. Les vibrations de l'armoire électrique 10 sont par exemple dues au passage de petits animaux comme des rongeurs, ou à une mauvaise fixation des composants de l'armoire électrique entre eux. Le capteur de vibrations 67 est par exemple un accéléromètre ou un gyroscope. Dans l'exemple de la figure 1, le capteur de vibrations 67 est placé dans la plinthe 27. En variante, le capteur de vibrations 67 est localisé sur l'un des éléments suivants : l'enveloppe 11, la borne d'entrée 12, le premier bus de dérivation 18, le bus principal 17, le deuxième bus de dérivation 19, les dispositifs de protection électrique 22 et 23 et les bornes de sortie 13 ; et est configuré pour mesurer la grandeur représentative des vibrations au voisinage de l'élément correspondant.

Selon une variante non représentée, le système de répartition 1 comprend plusieurs capteurs de vibrations localisés sur tout ou partie des éléments précédemment cités.

De manière particulièrement avantageuse, le système de répartition 1 comprend des capteurs de vibrations mesurant les vibrations de chacun des éléments cités précédemment, et en outre, comprend des capteurs de vibrations mesurant les vibrations à différentes positions du bus principal 17 et des premier 18 et deuxième 19 bus secondaires.

Le capteur de bruit 69 est configuré pour acquérir une valeur d'une grandeur représentative de bruit à l'intérieur de l'armoire électrique 10. Le bruit à l'intérieur de l'armoire électrique 10 est par exemple causé par des petits animaux comme des rongeurs, à une mauvaise fixation des éléments de l'armoire électrique entre eux, ou à un corps étranger introduit par erreur dans l'armoire électrique, comme par exemple un outil oublié lors d'une maintenance. Le capteur de bruit 69 est par exemple un microphone. Dans l'exemple de la figure 1, le capteur de bruit 69 est placé dans le tiroir 25 et est configuré pour mesurer la grandeur représentative du bruit dans le tiroir 25. En variante, le capteur de bruit 69 est localisé sur ou au voisinage de l'un des éléments suivants : l'enveloppe 11, la borne d'entrée 12, les dispositifs de protection électrique 22 et 23, les bornes de sortie 13 et la plinthe 27 ; et est configuré pour mesurer la grandeur représentative du bruit au voisinage de l'élément correspondant.

Selon une variante non représentée, le système de répartition 1 comprend plusieurs capteurs de bruit localisés sur ou au voisinage de tout ou partie des éléments précédemment cités, et sont configurés pour mesurer le bruit au voisinage de tout ou partie des éléments précédemment cités.

Le système de répartition 1 comprend en outre un dispositif électronique 90 d'aide à la surveillance de l'armoire électrique 10, aussi appelé dispositif d'aide à la surveillance 90. Sur l'exemple de la figure 1, le dispositif d'aide à la surveillance 90 est un dispositif électronique autonome localisé à l'intérieur de l'enveloppe 11. En variante non représentée, le dispositif d'aide à la surveillance 90 est inclus dans un autre équipement électronique, par exemple dans un serveur, localisé alors de préférence à l'extérieur de l'enveloppe 11.

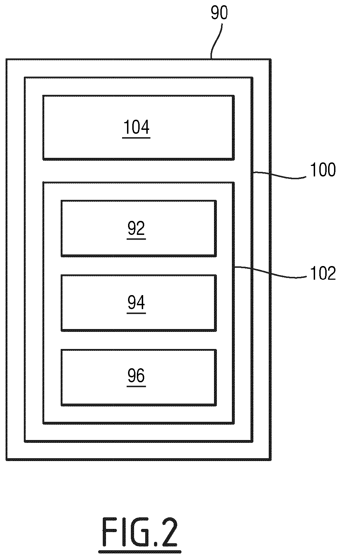

Le dispositif d'aide à la surveillance 90 comprend un module d'acquisition 92, un module d'estimation 94 et un module d'émission 96, visibles sur la figure 2.

Dans l'exemple de la figure 2, le dispositif d'aide à la surveillance 90 comprend une unité de traitement d'informations 100 formée par exemple d'une mémoire 102 et d'un processeur 104 associé à la mémoire 102.

Dans l'exemple de la figure 2, le module d'acquisition 92, le module d'estimation 94 et le module d'émission 96, sont réalisés chacun sous forme d'un logiciel, ou d'une brique logicielle, exécutable par le processeur 104. La mémoire 102 du dispositif d'aide à la surveillance 90 est alors apte à stocker un logiciel d'acquisition, un logiciel d'estimation et un logiciel d'émission. Le processeur 104 est alors apte à exécuter chacun des logiciels parmi le logiciel d'acquisition, le logiciel d'estimation et le logiciel d'émission.

En variante non représentée, le module d'acquisition 92, le module d'estimation 94 et le module d'émission 96, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*).

Lorsque le dispositif d'aide à la surveillance 90 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le module d'acquisition 92 est configuré pour acquérir les valeurs des grandeurs mesurées par chacun des capteurs d'intensité 41 à 44, chacun des capteurs de tension 51 à 54, chacun des capteurs de gaz 56 et 57, chacun des capteurs d'humidité 58 et 59, chacun des capteurs de température 61 à 64, le capteur de vibration 67 et le capteur de bruit 69.

Le module d'estimation 94 est configuré pour calculer un état estimé de l'armoire électrique 10 via un réseau de neurones artificiels, ou ANN (de l'anglais *Artificial Neural Network*), appelé par la suite réseau de neurones. Pour cela, le module d'estimation 94 utilise les valeurs acquises par le module d'acquisition 92, de telle sorte que chaque grandeur acquise par le module d'acquisition 92 soit une variable d'entrée du réseau de neurones. L'état estimé est une variable de sortie du réseau de neurones.

Le réseau de neurones comporte une succession ordonnée de couches de neurones dont chacune prend ses entrées sur les sorties de la couche précédente. Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

En variante, le réseau de neurones est un réseau de neurones à convolution. Le réseau de neurones à convolution est aussi parfois dénommé réseau de neurones convolutif ou par le sigle CNN qui renvoie à la dénomination anglaise de « *Convolutional Neural Networks ».*

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « couche dense ».

L'état estimé de l'armoire électrique 10 est avantageusement un état parmi le groupe consistant en un état normal, un état anormal et un état critique. L'état normal est associé à un fonctionnement normal de l'armoire électrique 10, c'est-à-dire que le réseau de neurones estime qu'aucun défaut électrique, mécanique ou thermique n'est présent dans l'armoire électrique 10. L'état anormal est associé à un fonctionnement anormal de l'armoire électrique 10, c'est-à-dire que le réseau de neurones estime qu'un défaut électrique, mécanique ou thermique est présent, mais qu'il ne pose pas de problème nécessitant une action immédiate de la part de l'utilisateur. Un état anormal est par exemple la détection de bruit dans l'armoire électrique 10, sans modification des autres grandeurs mesurées par les capteurs. L'état critique est associé à un défaut critique dans l'armoire électrique 10, c'est-à-dire que le réseau de neurones estime qu'un défaut électrique, mécanique ou thermique est présent et qu'il pose un risque majeur pour le fonctionnement de l'armoire électrique, nécessitant par exemple une opération de maintenance en urgence, et/ou une coupure du courant électrique circulant dans l'armoire électrique 10, c'est-à-dire un arrêt de l'armoire électrique 10.

En d'autres termes, l'état normal, l'état anormal et l'état critique correspondent à trois niveaux successifs de criticité, l'état normal étant associé à un premier niveau, l'état anormal étant associé à un deuxième niveau supérieur au premier niveau, et enfin l'état critique étant associé à un troisième niveau supérieur au deuxième niveau. Ces états permettent à un utilisateur d'estimer s'il est nécessaire d'intervenir sur l'armoire électrique 10 pour une opération de maintenance, et le degré d'urgence de l'opération de maintenance.

Le réseau de neurones est entraîné, lors d'une phase d'entraînement préliminaire ou préalable, afin que le réseau de neurones puisse ensuite prédire correctement l'état estimé lors de la phase d'inférence, postérieure à cette phase d'apprentissage préliminaire. L'apprentissage est effectué à l'aide de données d'apprentissage correspondant à la fois aux variables d'entrée et à la ou aux variables de sortie du réseau de neurones. Par exemple, les données d'apprentissage sont des exemples de mesure de capteurs, et l'état estimé de l'armoire électrique associé à ces mesures. Un calcul d'erreur entre la variable de sortie prédite (par le réseau de neurones à partir des données d'apprentissage d'entrée) et la donnée d'apprentissage de sortie correspondante est effectué, puis un ajustement des poids synaptiques du réseau de neurones en fonction de l'erreur calculée est réalisé, par exemple via un algorithme de rétropropagation du gradient et avec réitération de ce qui précède afin de minimiser l'erreur, c'est-à-dire de réduire progressivement l'erreur jusqu'à atteindre un seuil minimal prédéfini.

La phase d'apprentissage est alors terminée lorsque l'erreur a été réduite de manière à atteindre ce seuil. Les poids synaptiques et les éventuels biais utilisés pour l'inférence du réseau de neurones sont alors ceux obtenus à l'issue de cette phase d'apprentissage, c'est-à-dire correspondant à cette erreur minimale entre variable de sortie prédite et donnée d'apprentissage de sortie correspondante.

Le module d'émission 96 est configuré pour émettre un message représentatif de l'état estimé sous une forme parmi une forme visuelle et une forme sonore. Le module d'émission 96 est par exemple une interface homme-machine, ou est connecté à une interface homme-machine, pour afficher un message représentatif de l'état estimé de l'armoire électrique 10. Le message est par exemple un code couleur, une couleur étant associée à un état estimé, ou un message sonore, notamment une alarme si le module d'estimation 94 calcule que l'état estimé est un état critique. L'homme du métier comprendra qu'à chaque état estimé est associé une restitution visuelle ou sonore respective, et distincte d'un état estimé à l'autre, afin que l'utilisateur puisse plus facilement et plus rapidement percevoir quel état de l'armoire électrique 10 a été estimé par le dispositif d'aide à la surveillance 90. Autrement dit, à chaque état estimé est associé une couleur respective et/ou un message sonore respectif.

De manière optionnelle, le module d'émission 96 est configuré pour émettre des informations additionnelles relatives aux capteurs, par exemple les valeurs des grandeurs mesurées par les capteurs.

De manière particulièrement avantageuse, le module d'estimation 94 est configuré pour estimer l'état de l'armoire électrique 10 pour plusieurs risques distincts, associés à l'armoire électrique 10. Un premier risque est par exemple un défaut de l'armoire électrique 10, qu'il soit électrique, mécanique ou thermique ; et un deuxième risque est par exemple un risque d'arc électrique dans l'armoire électrique 10. De manière avantageuse, d'autres risques sont estimés par le module d'estimation 94, comme le risque de présence de petits animaux ou de rongeurs à l'intérieur de l'armoire électrique 10, le risque de présence d'eau à l'intérieur de l'armoire électrique 10, etc.

Dans le cas où le module d'estimation 94 est configuré pour estimer l'état de l'armoire électrique 10 pour plusieurs risques, le module d'estimation 94 calcule un état estimé pour chacun des risques. Dans ce cas, les variables de sortie du réseau de neurones sont un état estimé de l'armoire électrique 10 pour chaque risque, et le module d'émission 96 est alors configuré pour émettre un message représentatif de l'état estimé pour chaque risque.

Avantageusement le module d'estimation 94 est configuré pour générer un état estimé résultant égal à l'état estimé pour le risque le plus grand au moment où est réalisée l'estimation. Le risque le plus grand est par exemple celui ayant une probabilité d'apparition la plus élevée. En variante ou en complément, le risque le plus grand est celui présentant un niveau de criticité le plus élevé selon un ordre prédéfini de criticité entre risques, tout en ayant une probabilité d'apparition supérieure à un seuil minimal prédéfini. Le module d'émission 96 est alors configuré pour émettre un message représentatif de l'état estimé résultant, voire également pour émettre des informations complémentaires liées au risque qui est le plus grand au moment de l'estimation.

En variante, le module d'estimation 94 calcule un état estimé de l'armoire électrique 10 seulement pour le risque le plus grand. Dans ce cas, la variable de sortie du réseau de neurones est l'état estimé de l'armoire électrique 10 pour le risque le plus grand, et le module d'émission 96 est alors configuré pour émettre un message représentatif de l'état estimé pour ledit risque.

Afin d'estimer au mieux les différents risques, certains capteurs sont avantageusement ajoutés, ou éventuellement retirés. En particulier, dans le cas d'une estimation du risque d'arc électrique, les capteurs de vibration 67 et de bruit 69 sont particulièrement avantageux afin d'obtenir une prédiction la plus précise et exacte possible, alors que dans le cas d'une estimation du risque de défaut électrique, mécanique ou thermique de l'armoire électrique, les capteurs de vibration 67 et de bruit 69 peuvent être omis sans que cela ait un impact significatif sur l'exactitude du calcul réalisé par le module d'estimation 94.

Le ou les risques pris en compte pour le calcul de l'état estimé par le module d'estimation 94 sont avantageusement choisis par l'utilisateur, les capteurs étant ajoutés en fonction du ou des risques que l'utilisateur souhaite que le module d'estimation 94 évalue. En variante, les capteurs nécessaires au calcul de l'état estimé pour les différents risques sont tous présents dans l'armoire électrique 10, et les capteurs sont ensuite activés par le dispositif d'aide à la surveillance 90 en fonction du ou des risques choisis par l'utilisateur.

Un procédé d'aide à la surveillance de l'armoire électrique 10, mis en oeuvre par le dispositif d'aide à la surveillance 90 est maintenant décrit.

L'armoire électrique 10 est en fonctionnement, ainsi du courant électrique circule à travers l'armoire électrique 10 depuis la source 3 jusqu'aux charges 5. Les capteurs d'intensité 41 à 44, les capteurs de tension 51 à 54, les capteurs de gaz 56 et 57, les capteurs d'humidité 58 et 59, les capteurs de température 61 à 64, le capteur de vibration 67 et le capteur de bruit 69 sont en fonctionnement, est apte à effectuer des mesures en fonction du risque pour lequel l'état estimé doit être calculé.

Lors d'une étape 201, le dispositif d'aide à la surveillance 90, et plus précisément le module d'acquisition 92, acquiert les valeurs des grandeurs mesurées par les capteurs d'intensité 41 à 44, les capteurs de tension 51 à 54, les capteurs de gaz 56 et 57, les capteurs d'humidité 58 et 59, les capteurs de température 61 à 64, le capteur de vibration 67 et le capteur de bruit 69.

Ces valeurs sont transmises au module d'estimation 94, qui lors d'une étape 202 suivantes calcule, via le réseau de neurones, l'état estimé de l'armoire électrique 10. Comme mentionné précédemment, chaque grandeur mesurée par les capteurs d'intensité 41 à 44, les capteurs de tension 51 à 54, les capteurs de gaz 56 et 57, les capteurs d'humidité 58 et 59, les capteurs de température 61 à 64, le capteur de vibration 67 et le capteur de bruit 69 est une variable d'entrée du réseau de neurones, et la variable de sortie du réseau de neurones est l'état estimé.

Lors d'une étape 203 postérieure à l'état de calcul 202, le module d'émission 96 émet, soit sous forme visuelle, soit sous forme sonore, soit à la fois sous forme visuelle et sous forme sonore, un message représentatif de l'état estimé lors de l'étape de calcul 202. De manière optionnelle, le module d'émission 96 émet également des données complémentaires, telles que les valeurs mesurées par les capteurs.

En variante, lors de l'étape 202, le module d'estimation 94 calcule un état estimé pour chaque risque. Dans ce cas lors de l'étape 203, le module d'émission 96 émet un message représentatif de l'état estimé pour chaque risque.

Selon une autre variante, si le module d'estimation 94 est configuré pour estimer plusieurs risques associés à l'armoire électrique, alors lors de l'étape 202, le module d'estimation 94 génère un état estimé résultant égal à l'état estimé pour le risque le plus grand au moment où est réalisé l'estimation, en plus du calcul de l'état estimé à l'étape 202. Dans ce cas, à l'étape 203, le module d'émission 96 émet un message représentatif de l'état estimé résultant, voire également des informations complémentaires liées au type de risque qui est le plus grand au moment de l'estimation.

Selon une variante non représentée, le module d'estimation 94 est avantageusement configuré en outre pour commander le sectionneur 16 en position d'ouverture, correspondant à une absence de circulation de courant dans l'armoire électrique 10, lorsque l'état estimé est égal à l'état critique.

Ainsi, le dispositif d'aide à la surveillance 90 aide à la surveillance de l'armoire électrique 10. La possibilité d'évaluer certains risques spécifiques, comme le risque d'arc électrique, en ajoutant des capteurs spécifiques permet de personnaliser la surveillance de l'armoire électrique 10 en accord avec les préférences de l'utilisateur. L'émission d'un message représentatif de l'état estimé facilite la prise de décision de l'utilisateur. En fonction du message émis par le module d'émission 96, l'utilisateur décide de l'action à mettre en place, par exemple une opération de maintenance et une date à laquelle elle est effectuée, et/ou une coupure du courant électrique circulant dans l'armoire électrique 10.

Toute caractéristique décrite pour un mode de réalisation ou une variante dans ce qui précède peut être mise en oeuvre pour les autres modes de réalisation et variantes décrits précédemment, pour autant que techniquement faisable.

## Revendications

1. Dispositif électronique d'aide à la surveillance (90) d'une armoire électrique (10), l'armoire électrique (10) comprenant une borne d'entrée (12) et plusieurs bornes de sortie (13), et étant apte à être connectée à une source (3) via la borne d'entrée (12) et à une pluralité de charges (5) via les bornes de sortie (13) et configurée pour répartir un courant électrique depuis la source (3) vers la pluralité de charges (5), l'armoire électrique (10) comprenant un sectionneur (16) connecté à la borne d'entrée (12) et un bus principal (17) connecté entre le sectionneur (16) et les bornes de sortie (13), le dispositif (90) comprenant :
- un module d'acquisition (92), configuré pour acquérir des valeurs de grandeurs représentatives d'une intensité et respectivement d'une tension d'un courant électrique circulant entre la borne d'entrée (12) et les bornes de sortie (13), mesurées par un capteur d'intensité (41, 42, 43, 44) et respectivement un capteur de tension (51, 52, 53, 54) ;
- un module d'estimation (94), configuré pour calculer un état estimé de l'armoire électrique (10) via un réseau de neurones, chaque grandeur acquise par le module d'acquisition (92) étant une variable d'entrée du réseau de neurones, l'état estimé de l'armoire électrique (10) étant une variable de sortie du réseau de neurones ; et
- un module d'émission (96), configuré pour émettre un message représentatif de l'état estimé sous une forme parmi une forme visuelle et une forme sonore ;
le module d'acquisition étant en outre configuré pour acquérir une valeur d'au moins une grandeur additionnelle mesurée par au moins un capteur additionnel parmi un capteur de gaz (56, 57) et un capteur d'humidité (58, 59), la ou chaque grandeur étant représentative respectivement d'une quantité de particules de gaz et d'une humidité à l'intérieur de l'armoire électrique (10),
**caractérisé en ce que** le module d'acquisition (92) est en outre configuré pour acquérir une valeur d'une grandeur représentative de bruit dans l'armoire électrique (10), mesurée par un capteur de bruit (69), et **en ce que** le module d'estimation (94) est alors configuré pour calculer l'état estimé de l'armoire électrique (10) via le réseau de neurones en fonction en outre de l'au moins une grandeur additionnelle, l'au moins une grandeur additionnelle incluant la grandeur représentative de bruit, l'au moins une grandeur additionnelle étant une variable additionnelle d'entrée du réseau de neurones.

2. Dispositif (90) selon la revendication 1 dans lequel le module d'acquisition (92) est en outre configuré pour acquérir les valeurs des grandeurs additionnelles mesurées par le capteur d'humidité (56, 57) et par le capteur de gaz (58, 59).

3. Dispositif (90) selon l'une quelconque des revendications précédentes, dans lequel le module d'acquisition (92) est en outre configuré pour acquérir une valeur d'une grandeur mesurée par un capteur de température (61, 62, 63, 64, 65), la grandeur mesurée étant représentative d'une température à l'intérieur de l'armoire électrique (10).

4. Dispositif (90) selon l'une quelconque des revendications précédentes, dans lequel le module d'acquisition (92) est en outre configuré pour acquérir des valeurs de grandeurs mesurées par une pluralité de capteurs de température (61, 62, 63, 64, 65), les grandeurs étant représentatives de la température à l'intérieur de l'armoire électrique (10), chaque capteur de température (61, 62, 63, 64, 65) étant configuré pour mesurer une température parmi : une température au voisinage de la borne d'entrée (12), une température au voisinage d'une borne de sortie (13) respective, une température du bus principal (17) et une température d'un dispositif de protection électrique (22, 23), connecté entre le bus principal (17) et une borne de sortie respective (13).

5. Dispositif (90) selon l'une quelconque des revendications précédentes, dans lequel le module d'acquisition (92) est en outre configuré pour acquérir une valeur d'une grandeur représentative de vibrations de l'armoire électrique (10), mesurée par un capteur de vibrations (67).

6. Dispositif (90) selon l'une quelconque des revendications précédentes, dans lequel l'état estimé de l'armoire électrique (10) est un état parmi le groupe consistant en : un état normal, un état anormal et un état critique.

7. Système (1) de répartition d'un courant électrique entre une source (3) et une pluralité de charges (5), le système (1) comprenant :
- une armoire électrique (10), comprenant :
∘ une borne d'entrée (12), apte à être connectée à la source (3),
∘ plusieurs bornes de sortie (13), aptes à être connectées à la pluralité de charges (5),
∘ un sectionneur (16), connecté à la borne d'entrée (12), et
∘ un bus principal (17), connecté entre le sectionneur (16) et la pluralité de bornes de sortie (13),
l'armoire électrique (10) étant configurée pour répartir le courant électrique depuis la source (3) vers la pluralité de charges (5) ;
- un capteur d'intensité (41, 42, 43, 44) et respectivement un capteur de tension (51, 52, 53, 54), configurés pour mesurer des valeurs de grandeurs représentatives d'une intensité et respectivement d'une tension d'un courant électrique circulant entre la borne d'entrée (12) et les bornes de sortie (13) de l'armoire électrique (10) ;
- un dispositif électronique d'aide à la surveillance (90) de l'armoire électrique (10),
le système (1) comprenant en outre au moins un capteur additionnel parmi un capteur de gaz (56, 57) et un capteur d'humidité (58, 59), configuré pour acquérir une valeur d'au moins une grandeur additionnelle, représentative respectivement d'une quantité de particules de gaz et d'une humidité à l'intérieur de l'armoire électrique (10), **caractérisé en ce que** le système comprend en outre un capteur de bruit (69) et **en ce que** le dispositif électronique d'aide à la surveillance (90) est selon l'une quelconque des revendications précédentes.

8. Procédé d'aide à la surveillance d'une armoire électrique (10), l'armoire électrique (10) comprenant une borne d'entrée (12) et plusieurs bornes de sortie (13), et étant apte à être connectée à une source (3) via la borne d'entrée (12) et à une pluralité de charges (5) via les bornes de sortie (13) et configurée pour répartir un courant électrique depuis la source (3) vers la pluralité de charges (5), l'armoire électrique (10) comprenant un sectionneur (16) connecté à la borne d'entrée (12) et un bus principal (17) connecté entre le sectionneur (16) et les bornes de sortie (13), le procédé étant mis en oeuvre par un dispositif électronique d'aide à la surveillance (90), le procédé comprenant les étapes suivantes :
- acquisition (201) de valeurs de grandeurs mesurées par un capteur d'intensité (41, 42, 43, 44) et respectivement un capteur de tension (51, 52, 53, 54), les grandeurs étant représentatives d'une intensité et respectivement d'une tension du courant électrique circulant entre la borne d'entrée (12) et les bornes de sortie (13) de l'armoire électrique ;
- calcul (202), via un réseau de neurones, d'un état estimé de l'armoire électrique (10), chaque grandeur mesurée étant une variable d'entrée du réseau de neurones, l'état estimé étant une variable de sortie du réseau de neurones ; et
- émission (203), sous une forme parmi une forme visuelle et une forme sonore, d'un message représentatif de l'état estimé,
le procédé comprenant en outre une étape d'acquisition (201) d'une valeur d'au moins une grandeur additionnelle mesurée par au moins un capteur additionnel parmi un capteur de gaz (56, 57) et un capteur d'humidité (58, 59), la ou chaque grandeur étant représentative respectivement d'une humidité et d'une quantité de particules de gaz à l'intérieur de l'armoire électrique (10), **caractérisé en ce que** le procédé comprend en outre une étape d'acquisition (201) d'une valeur d'une grandeur représentative de bruit dans l'armoire électrique, mesurée par un capteur de bruit (69), et **en ce que** lors de l'étape de calcul (202), l'au moins une grandeur additionnelle inclut la grandeur représentative de bruit, et l'au moins une grandeur additionnelle est une variable additionnelle d'entrée du réseau de neurones.

9. Programme d'ordinateur comportant des instructions logicielles qui, lorsqu'elles sont exécutées par un ordinateur, mettent en oeuvre un procédé selon la revendication 10.
